(19) Europäisches Patentamt
European Patent Office
Office européen des brevets

(11) **EP 4 172 703 B1**

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **21739048.3**

(22) Anmeldetag: **30.06.2021**

(51) Internationale Patentklassifikation (IPC):
**G05B 19/418** *(2006.01)*

(52) Gemeinsame Patentklassifikation (CPC):
**G05B 19/41865;** G05B 19/41885;
G05B 2219/32304; G05B 2219/45143;
G05B 2219/45234; Y02P 90/02

(86) Internationale Anmeldenummer:
**PCT/EP2021/067955**

(87) Internationale Veröffentlichungsnummer:
**WO 2022/003002 (06.01.2022 Gazette 2022/01)**

(54) **PLANUNG EINER FERTIGUNGSSTÄTTE**

PLANNING OF A PRODUCTION SITE

PLANIFICATION D'UN SITE DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2020 DE 102020208071**

(43) Veröffentlichungstag der Anmeldung:
**03.05.2023 Patentblatt 2023/18**

(73) Patentinhaber: **Trumpf Werkzeugmaschinen SE & Co. KG**
**71254 Ditzingen (DE)**

(72) Erfinder:
• **MIETH, Carina**
**70839 Gerlingen (DE)**
• **KALLAT, Fadil**
**44339 Dortmund (DE)**

• **REHOF, Jakob**
**44229 Dortmund (DE)**

(74) Vertreter: **Trumpf Patentabteilung**
**Trumpf SE + Co. KG**
**TH550 Patente und Lizenzen**
**Johann-Maus-Straße 2**
**71254 Ditzingen (DE)**

(56) Entgegenhaltungen:
EP-A1- 3 451 811       US-A1- 2015 032 497
US-A1- 2019 179 290

• BJØRNER NIKOLAJ ET AL: "Supercharging Plant Configurations Using Z3", 1 July 2021, ADVANCES IN INTELLIGENT DATA ANALYSIS XIX; [LECTURE NOTES IN COMPUTER SCIENCE; LECT.NOTES COMPUTER], PAGE(S) 1 - 25, ISBN: 978-3-540-35470-3, ISSN: 0302-9743, XP047598936

**Beschreibung**

Hintergrund der Erfindung

Die Erfindung betrifft ein Verfahren zur Planung einer Fertigungsstätte. Die Erfindung betrifft weiterhin ein Computerprogrammprodukt, umfassend Befehle, die bei der Ausführung eines Programms durch einen Computer diesen veranlassen, das Verfahren auszuführen.

Aus der US 2015/0032497 A1 ist ein Verfahren zu Erstellung einer Simulation einer Produktionsstätte bekannt.

Aus der US 2019/0179290 A1 ist ein Verfahren zur Erstellung eines Produktionsverfahrens bekannt.

Aus der EP 3 451 811 A1 ist ein Verfahren zur Erstellung eines Produktionsplans bekannt.

Es ist bekannt, Algorithmen zur Planung von Fertigungsstätten einzusetzen. Beispielsweise ist es aus dem nachfolgend zitierten Artikel bekannt geworden, eine Software bereit zu stellen, die die Planung einer Fertigungsstätte erleichtert: S. Völker, M. Bacher, P.-M. Schmidt und G. Gross: "Automatische Generierung logistischer Simulationsmodelle auf Basis von Planungswerkzeugen der digitalen Fabrik", Frontiers in Simulation, vol. 15, Seiten 518-523, 2005. Der zitierte Ansatz beruht darauf, den Rechenaufwand bei der Erstellung von entsprechenden Simulationen zu verringern.

Die bekannten Verfahren beruhen mithin darauf, die Simulation von Fertigungsstätten zu vereinfachen, die von Experten vorgegeben werden. Dabei kommt es jedoch zwangsläufig zu vereinfachenden, auf Erfahrung basierenden, Vorgaben durch die Experten. Varianten, die die Experten von vornherein verwerfen, bleiben bei den bekannten Verfahren unberücksichtigt.

Aufgabe der Erfindung

Es ist daher Aufgabe der Erfindung, ein Verfahren bereit zu stellen, das auch von Experten normalerweise nicht berücksichtigte Planungsvarianten berücksichtigt.

Beschreibung der Erfindung

Diese Aufgabe wird erfindungsgemäß gelöst durch ein Verfahren gemäß Anspruch 1 und ein Computerprogrammprodukt gemäß Anspruch 12. Die Unteransprüche geben bevorzugte Weiterbildungen wieder.

Die erfindungsgemäße Aufgabe wird somit gelöst durch ein Verfahren zur Planung einer Fertigungsstätte unter Einsatz eines Algorithmus. Der Algorithmus führt zumindest folgende Verfahrensschritte aus:

A) Einlesen der auszuführenden Aufträge (was soll wie bearbeitet werden);

B) Auswahl mehrerer Blechbearbeitungs-Anlagen aus einer Anlagen-Bibliothek zur Bearbeitung dieser Aufträge;

C) Zusammenstellen möglicher Anlagen-Kombinationen dieser Blechbearbeitungs-Anlagen und Ausführen von Simulationen zur Bearbeitung der Aufträge mit diesen Anlagen-Kombinationen;

D) Ranking (Erstellen einer Reihenfolge / Bestenliste) der Anlagen-Kombinationen anhand zumindest eines vordefinierten Optimierungskriteriums.

Erfindungsgemäß ist es somit vorgesehen, zunächst mehrere Anlagen-Kombinationen zu erstellen und unter diesen die beste Anlagen-Kombination zu finden. Auf diese Weise werden nicht von vornherein Anlagen-Kombinationen verworfen, die sich im Nachhinein als aussichtsreich erwiesen hätten.

Besonders bevorzugt werden im Verfahrensschritt C) alle möglichen Anlagen-Kombinationen zusammengestellt. Auf diese Weise wird sichergestellt, dass keine Anlagen-Kombination unberücksichtigt bleibt.

Der Algorithmus kann komponentenbasiert sein, um Programmieraufwand zu minimieren.

In weiter bevorzugter Ausgestaltung der Erfindung erfolgt das Erstellen der Anlagen-Kombinationen im Verfahrensschritt C) durch einen Combinatory Logic Synthesizer (CLS) Solver, welcher oftmals auch in der Schreibweise (CL)S angeführt wird und beispielsweise in folgendem Artikel beschrieben ist: J. Bessai, B. Düdder, G. T. Heineman, et al., "(CL)S Framework," 2019, verfügbar unter https://github.com/combinators/cls-scala. Die CLS Solver stehen dort vollständig implementiert in der Software "Scala" zur Verfügung. Weiterhin sind CLS-Solver aus folgendem Artikel bekannt geworden: J. Bessai, A. Dudenhefner, B. Düdder, M. Martens, and J. Rehof, "Combinatory Logic Synthesizer," in Leveraging Applications of Formal Methods, Verification and Validation. Technologies for Mastering Change (T. Margaria and B. Steffen, eds.), Lecture Notes in Computer Science, (Berlin, Heidelberg), pp. 26-40, Springer, 2014.

Um die Rechenzeit zu verkürzen, kann vor dem Erstellen der Anlagen-Kombinationen ein Zieltypfilter vorgesehen werden, um diejenigen Anlagen-Kombinationen auszufiltern, die technisch nicht kombinierbar sind.

Um die Rechenzeit zu verkürzen, kann alternativ oder zusätzlich dazu im Verfahrensschritt D) ein Ausfiltern der Anlagen-Kombinationen erfolgen, die eine vordefinierte Randbedingung nicht erfüllen. Beispielsweise kann als Randbedingung vorgegeben werden, dass eine bestimmte Gesamtproduktionszeit und/oder bestimmte Gesamtanlagenkosten nicht überschritten werden.

Das Ranking im Verfahrensschritt D) erfolgt vorzugsweise auf Basis möglichst niedriger Gesamt-Anlagenkosten bzw. möglichst minimaler Gesamt-Produktionszeit.

Das Ranking wird dabei vorzugsweise von einem Satisfiability Modulo Theory (SMT) Framework erstellt. Derlei SMT Frameworks sind beispielsweise in folgenden Artikeln veröffentlicht: L. de Moura and N. Bjørner, "Z3: An Efficient SMT Solver," in Tools and Algorithms for the Construction and Analysis of Systems (C. R. Ramakrishnan and J. Rehof, eds.), Lecture Notes in Computer Science, (Berlin, Heidelberg), pp. 337-340, Springer, 2008 sowie N. Bjørner, A.-D. Phan, and L. Fleckenstein, "vZ - An Optimizing SMT Solver," in Tools and Algorithms for the Construction and Analysis of Systems (C. Baier and C. Tinelli, eds.), vol. 9035, pp. 194-199, Berlin, Heidelberg: Springer Berlin Heidelberg, 2015.

Besonders bevorzugt wird eine Kombination aus CLS- und SMT-Komponenten, wie bspw. in dem Artikel F. Kallat, T. Schäfer, and A. Vasileva, "CLS-SMT: Bringing Together Combinatory Logic Synthesis and Satisfiability Modulo Theories", in Electronic Proceedings in Theoretical Computer Science, vol. 301: pp. 51-65, 2019" veröffentlicht, eingesetzt, um effizient eine Vielzahl von Anlagen-Kombinationen zu simulieren und hieraus ein Ranking zu erstellen.

Mehrere Blechbearbeitungs-Anlagen können jeweils mehrere Anlagenparameter aufweisen. Die Anlagenparameter können die Bearbeitungsgeschwindigkeit der Blechbearbeitungs-Anlage, die bearbeitbare Blechtafelgröße und/oder das Vorhandensein bzw. Nicht-Vorhandensein einer automatischen Entladevorrichtung umfassen.

Besonders bevorzugt ist dabei zumindest ein Anlagenparameter einer diskreten Anzahl vordefinierter Bereiche zugeordnet. Weiter bevorzugt sind mehrere Anlagenparameter einer diskreten Anzahl vordefinierter Bereiche zugeordnet. Beispielsweise kann die konkrete Bearbeitungsgeschwindigkeit einer Blechbearbeitungs-Anlage einem der Bereiche "langsam", "mittel" oder "schnell" zugeordnet sein. Hierdurch verringert sich die Anzahl möglicher Anlagen-Kombinationen signifikant.

Die Anzahl der einzusetzenden Blechbearbeitungs-Anlagen kann vorgegeben und eingelesen werden. Alternativ dazu kann die Anzahl der einzusetzenden Blechbearbeitungs-Anlagen vom Algorithmus bestimmt werden.

In einem Verfahrensschritt E) kann eine Anlagenkombination grafisch dargestellt werden. Dabei kann die Anzahl der Blechbearbeitungs-Anlagen in der grafischen Darstellung angepasst werden.

Alternativ oder zusätzlich dazu kann im Verfahrensschritt E) das Errichten einer zuvor ermittelten Anlagen-Kombination erfolgen.

Die Erfindung umfasst weiterhin ein Computerprogrammprodukt, umfassend Befehle, die bei der Ausführung eines Programms durch einen Computer diesen veranlassen, das hier beschriebene Verfahren auszuführen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Detaillierte Beschreibung der Erfindung und Zeichnung

Fig. 1    zeigt eine schematische Ansicht von Anlagen-Parametern verschiedener Blechbearbeitungs-Anlagen; und

Fig. 2    zeigt eine schematische Ansicht von einem Algorithmus ausgeführter Verfahrensschritte zur optimalen Konfiguration der Blechbearbeitungs-Anlagen.

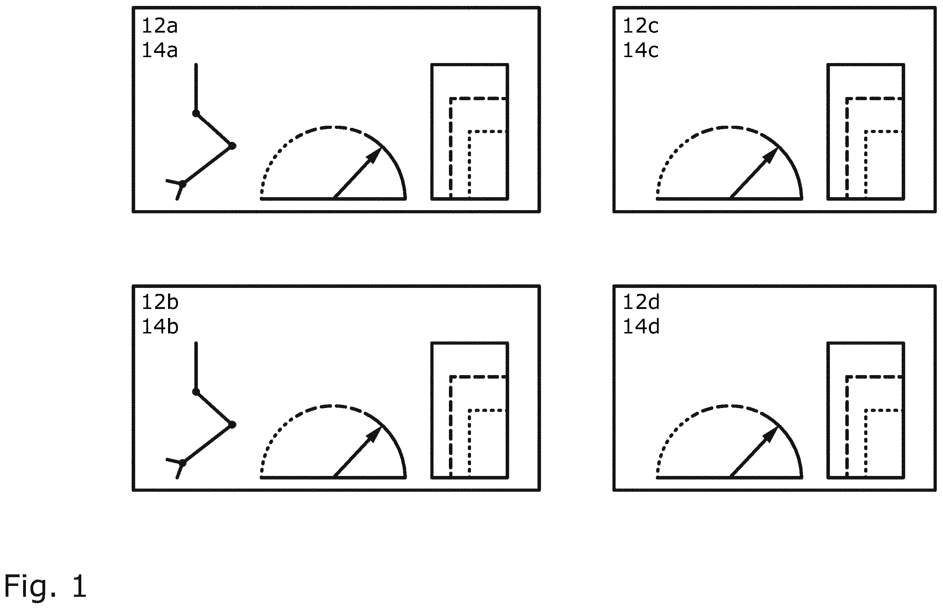

Fig. 1 zeigt eine teilweise grafische Repräsentation einer Fertigungsstätte 10. Die Fertigungsstätte 10 weist mehrere Blechbearbeitungs-Anlagen 12a, 12b, 12c, 12d auf. Die Blechbearbeitungs-Anlagen 12a und 12b liegen in Form von Schneidmaschinen vor; die Blechbearbeitungs-Anlagen 12c und 12d liegen in Form von Biegemaschinen vor. Die Blechbearbeitungsanlagen könnten bspw. alternativ oder zusätzlich auch Füge-Anlagen, wie bspw. (Laser-)Schweißmaschinen, oder Kombinations-Anlagen umfassen, die mehrere Blechbearbeitungsverfahren beherrschen, wie bspw. das Laserschneiden, Stanzen und/oder Umformen. Die Schneidmaschinen könnten insbesondere Laserschneidmaschinen und/oder Stanzmaschinen umfassen. Alternativ oder zusätzlich könnten auch Plasmaschneidmaschinen, Wasserstrahlschneidmaschinen oder andere Maschinen zum Schneiden umfasst sein. Die Biegemaschinen können insbesondere Schwenkbiegemaschinen und/oder Abkantmaschinen umfassen. Alternativ oder zusätzlich zu den Biegemaschinen, könnten auch andere Umformmaschinen umfasst sein.

Die Blechbearbeitungs-Anlagen 12a-12d weisen jeweils Anlagenparameter 14a, 14b, 14c, 14d auf. Die Anlagenparameter 14a-14d umfassen die Geschwindigkeit der jeweiligen Blechbearbeitungs-Anlage 12a-12d. Dies ist in Fig. 1 durch ein symbolisiertes Tachometer dargestellt.

Alternativ oder zusätzlich dazu umfassen die Anlagenparameter 14a-14d die von den Blechbearbeitungs-Anlagen 12a-12d jeweils bearbeitbaren Blechtafelgrößen. Dies ist in Fig. 1 durch verschieden große Rechtecke symbolisiert. Für die Schneidmaschinen 12a, 12b kann hinterlegt sein, ob sie jeweils eine automatische Entladevorrichtung aufweisen. Dies ist in Fig. 1 durch einen Greifer symbolisiert.

Die Anlagenparameter 14a-14d sind jeweils diskreten Bereichen zugeordnet. Beispielsweise ist die automatische Entladevorrichtung entweder vorhanden (A) oder nicht vorhanden (M). Die Geschwindigkeit ist entweder niedrig (N), mittel (M) oder hoch (H). Die bearbeitbare Blechtafelgröße ist entweder klein (K), mittel (M) oder groß (G). Hierdurch kann die Komplexität der Fertigungsplanung maßgeblich reduziert werden.

Die beschriebene Variabilität führt zu 2x3x3=18 möglichen Konfigurationen der Schneidmaschinen 12a, 12b. Für die Biegemaschinen 12c, 12d sind 2x3=6 Konfigurationen möglich. Dies führt zusammengenommen zu 18x18x6x6=11664 möglichen Kombinationen von zwei Schneidmaschinen 12a, 12b und zwei Biegemaschinen 12c, 12d. Es ist ersichtlich, dass dies für einen menschlichen Planer der Fertigungsstätte 10 nicht mehr überschaubar ist, um die optimale Fertigungsstätte 10 für einen typischen Auftrag zu bestimmen.

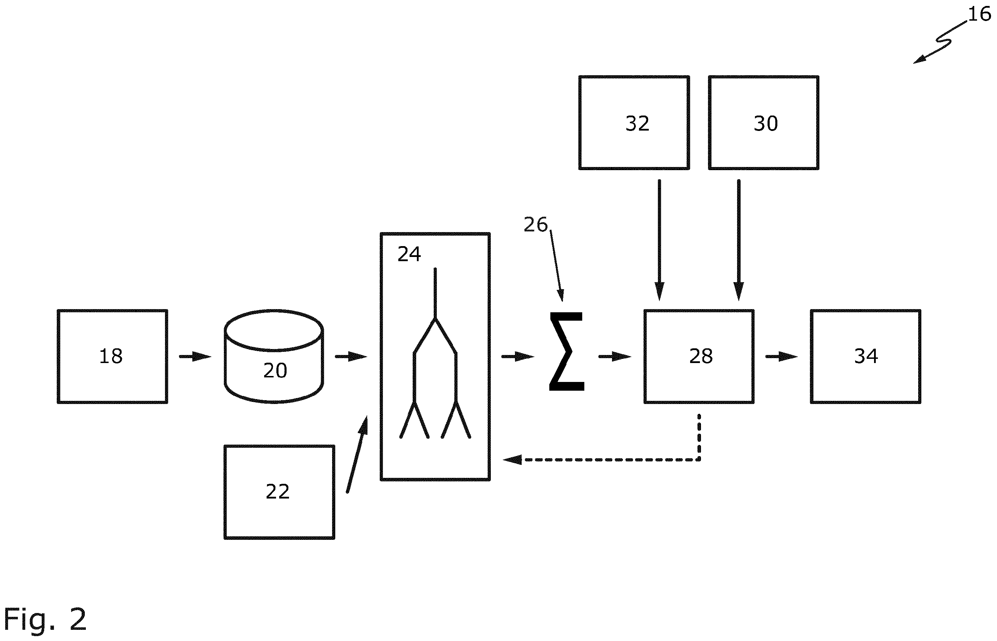

Erfindungsgemäß wird daher ein Software-implementierter Algorithmus 16 eingesetzt, der in Fig. 2 veranschaulicht ist.

Fig. 2 zeigt, dass der Algorithmus 16 auf eine Anlagen-Bibliothek 18 zurückgreift. In der Anlagen-Bibliothek 18 sind die Blechbearbeitungs-Anlagen 12a-12d und ihre Anlagenparameter 14a-14d hinterlegt. Weiterhin ist ein von der Anlagen-Bibliothek 18 gespeistes Depot 20 vorgesehen, dessen Inhalt nachfolgend beispielhaft wiedergegeben ist:

$$20 = \{ \text{sheetProduction} : (E \rightarrow E \rightarrow E \rightarrow E \rightarrow E) \cap$$

$$(\text{CuttingMachine}(\alpha1, \beta1, \gamma1) \rightarrow$$

$$\text{CuttingMachine}(\alpha2, \beta2, \gamma2) \rightarrow$$

$$\text{BendingMachine}(\alpha3, \gamma3) \rightarrow$$

$$\text{BendingMachine}(\alpha4, \gamma4) \rightarrow$$

$$\text{SheetProduction}),$$

$$\text{cuttingMachine} : (E \rightarrow E \rightarrow E \rightarrow E) \cap$$

$$(\text{CuttingTime}(\alpha) \rightarrow$$

$$\text{Unloading}(\beta) \rightarrow$$

$$\text{SheetSize}(\gamma) \rightarrow$$
$$\text{CuttingMachine}(\alpha, \beta, \gamma)),$$
$$\text{bendingMachine} : (E \rightarrow E \rightarrow E) \cap$$
$$(\text{BendingTime}(\alpha) \rightarrow$$
$$\text{SheetSize}(\gamma) \rightarrow$$
$$\text{BendingMachine}(\alpha, \gamma)),$$
$$\text{cuttingLowEnd} : E \cap \text{CuttingTime(Low)},$$
$$\text{cuttingMidEnd} : E \cap \text{CuttingTime(Mid)},$$
$$\text{cuttingHighEnd} : E \cap \text{CuttingTime(High)},$$
$$\text{bendingMidEnd} : E \cap \text{BendingTime(Mid)},$$
$$\text{bendingHighEnd} : E \cap \text{BendingTime(High)},$$
$$\text{manualUnloading} : E \cap \text{Unloading(Manual)},$$
$$\text{automaticUnloading} : E \cap \text{Unloading(Automated)}$$
$$\text{smallSheetSize} : E \cap \text{SheetSize(Small)}$$
$$\text{mediumSheetSize} : E \cap \text{SheetSize(Medium)}$$
$$\text{largeSheetSize} : E \cap \text{SheetSize(Large)} \}$$

$$\text{WF} = \{ (\alpha \rightarrow \text{Low}), (\alpha \rightarrow \text{Mid}), (\alpha \rightarrow \text{High}),$$
$$(\beta \rightarrow \text{Automated}), (\beta \rightarrow \text{Manual}),$$
$$(\gamma \rightarrow \text{Small}), (\gamma \rightarrow \text{Medium}), (\gamma \rightarrow \text{Large}) \}$$

Das Depot 20 enthält dabei die vorstehend beispielhaft dargestellten Kombinatoren. Die Kombinatoren Schneidemaschine und Biegemaschine stellen Konfigurationen der einzelnen Blechbearbeitungs-Anlagen 12a-12d dar. Zum Beispiel erfordert der Kombinator "Biegemaschine" einen Kombinator vom Typ E Ben-dingTime($\alpha$) und auch einen Kombinator vom Typ E SheetSize($\gamma$). Der native Typ E ist für den Datentyp scala.xml.Elem vorhanden, der XML-Dokumente in der Programmiersprache Scala repräsentiert. Die Variable $\alpha$ drückt aus, dass die Biegezeit willkürlich ist und entsprechend dem vorstehenden Listing WF durch Low, Mid oder End (niedrig, mittel, hoch) substituiert werden kann. Auf die gleiche Weise können auch die Variablen $\beta$ und $\gamma$ substituiert werden. So kann die BendingTime($\alpha$) in der Typenspezifikation der Biegemaschine durch die Kombinatoren bendingMidEnd oder bendingHighEnd ausgefüllt werden, da sie den gewünschten Typ liefern. Der industrielle Anwendungsfall wird durch den Kombinator sheetProduction beschrieben.

Der Kombinator drückt die Idee aus, dass für die Blechherstellung zwei Schneid- und zwei Biegemaschinen benötigt werden. Durch die Verwendung verschiedener Variablen ($\alpha 1$, $\alpha 2$, ...) werden unterschiedliche Konfigurationen der einzelnen Blechbearbeitungs-Anlagen 12a-12d erreicht. Dabei können Variablen - unter Berücksichtigung der zulässigen Substitutionen - Konstanten zugewiesen werden. Beispielsweise kann verlangt werden, dass die Schneidmaschine 12a großformatige Bleche bearbeitet und automatisiert abläbt.

Neben einem Kombinatornamen und einer Typannahme können Kombinatoren Implementierungsdetails wie Programme, Daten, Datenfragmente oder Funktionen in der Scala-Implementierung von CLS haben. Im vorliegenden Fall enthalten sie XML-Code, der ein Simulationsmodell in einer AnyLogic-Projektdatei darstellt. Die Kombinatoren der Variabilitätspunkte cuttingLowEnd, cuttingMidEnd,..., largeSheetSizes enthalten den XML-Code mit dem entsprechenden Parameter. Die Implementierungsdetails der Kombinatoren cuttingMachine und bendingMachine betten den Code der Variabilitätspunkte in XML-Dokumente ein, die die Blechbearbeitungs-Anlagen 12a-12d repräsentieren.

Die AnyLogic-Projektdatei wird überarbeitet und die entsprechenden XML-Fragmente in die Kombinator-Implementierungsdetails kopiert. Dadurch können die verschiedenen Konfigurationen nicht nur aufgezählt, sondern direkt zu fertigen und ausführbaren Simulationsmodellen zusammengesetzt werden.

Ein Zieltypfilter 22 kann die im Depot 20 vorhandenen Kombinationen auf die sinnvollen Kombinationen beschränken. Ein Combinatory Logic Synthesizer (CLS) Solver 24 generiert einen Baum-Entscheidungspfad 26 mit den möglichen Kombinationen. Ein Satisfiability Modulo Theory (SMT) Framework 28 begutachtet die Lösbarkeit der Kombinationen und streicht - gemäß einem gestrichelten Pfeil in Fig. 2 - die nicht sinnvollen Kombinationen im CLS Solver 24. Hierdurch kann signifikant Rechenzeit eingespart werden.

Vorzugsweise wird eine Kombination aus dem CLS Solver 24 und dem SMT Framework 28 eingesetzt, um das Resultat des CLS Solvers 24, das als Baumgrammatik zur Verfügung gestellt wird, in adäquate SMT-Formeln zu übersetzen. Das Lösen dieser SMT-Formeln mit dem SMT Framework 28 ergibt ein Baummodell. Alle möglichen Schneide- und Biegemaschinenkonfigurationen sind in den folgenden Sätzen darstellbar:

$$CM = \{\overrightarrow{cm}^1, \overrightarrow{cm}^2, ..., \overrightarrow{cm}^{18}\} \text{ und } BM = \{\overrightarrow{bm}^1, \overrightarrow{bm}^2, ..., \overrightarrow{bm}^6\}$$

Konfigurationen von Schneide- und Biegemaschinen können durch die folgenden Vektoren dargestellt werden:

$$\overrightarrow{cm} = (cm_{cspeed}; cm_{size}; cm_{unloading}) \text{ und } \overrightarrow{bm} = (bm_{bspeed}, bm_{size})$$

Eine Maschinenkonfiguration kann durch die Funktionen t() und c() definiert und die Produktionszeit bzw. die Anlagenkosten zurückgegeben werden. Beispielsweise kann davon ausgegangen werden, dass x Bleche durch Schneiden und Biegen von Blechbearbeitungs-Anlagen 12a-12d verarbeitet werden, die so konfiguriert sind, dass sie dieselbe Blechtafelgröße bearbeiten. Dasselbe gilt für die Variable y. Dabei kann vorgegeben werden: $cm^i_{size} = bm^j_{size}$ und $cm^k_{size} = bm^l_{size}$ mit $0 < i,k \leq 18$ und $0 < j,l \leq 6$.

Bei gegebener Blechanzahl *x, y* und der zusätzlichen Prozesszeiten $e_1$; $e_2$, die von der Blechtafelgröße abhängen, können die Gesamtkosten und die Durchlaufzeit für eine konkrete Konfiguration wie folgt berechnet werden:

$$totalCosts = x*(c(\overrightarrow{cm}^i) + c(b(\overrightarrow{bm}^j))) + y*(c(\overrightarrow{cm}^k) + c(\overrightarrow{bm}^l)),$$

$$totalTime = x*(t(\overrightarrow{cm}^i) + t(\overrightarrow{bm}^j)+e1) + y*(t(\overrightarrow{cm}^k) + t(\overrightarrow{bm}^l)+e2)$$

Dann kann beispielsweise vorgegeben werden, dass die Gesamtproduktionszeit nicht mehr als 400 Minuten beträgt bei minimalen Kosten:

$$totalTime \leq 400 \wedge min(totalCosts).$$

Die beispielhaft beschriebene(n) Randbedingung(en) 30 können als SMT-Formeln implementiert werden. Vorzugsweise ist das SMT-Framework 28 in Form eines Z3 Moduls ausgebildet, das beispielsweise in folgendem Artikel beschrieben wird: L. de Moura and N. Bjørner, "Z3: An Efficient SMT Solver," in Tools and Algorithms for the Construction and Analysis of Systems (C. R. Ramakrishnan and J. Rehof, eds.), Lecture Notes in Computer Science, (Berlin, Heidelberg), pp. 337-340, Springer, 2008. Dabei kann die Optimierungsfunktion vZ eingesetzt werden, wie sie beispielsweise in folgendem Artikel beschrieben wird: N. Bjørner, A.-D. Phan, and L. Fleckenstein, "Z - An Optimizing SMT Solver," in Tools and Algorithms for the Construction and Analysis of Systems (C. Baier and C. Tinelli, eds.), vol. 9035, pp. 194-199, Berlin, Heidelberg: Springer Berlin Heidelberg, 2015.

Durch das Lösen der Formeln kann ein Baummodell (siehe Baum-Entscheidungspfad 26) erhalten werden, das sich auf die preisgünstigste Konfiguration bezieht. Der Solver liefert das nächstbeste Baummodell, wenn das vorherige hinzugefügt wird als negierte Formel. Die Lösungen können als AnyLogic-Projektdateien generiert und gespeichert werden, sodass sie direkt ausgeführt und beispielsweise in der Simulationsumgebung AnyLogic 8 evaluiert werden können.

Das SMT Framework 28 berücksichtigt spezifische Randbedingungen 30 und Optimierungskriterien 32. Eine spezifische Randbedingung 30 könnte beispielsweise, wie zuvor ausgeführt, darin bestehen, dass die Gesamtproduktionszeit mit den Blechbearbeitungs-Anlagen 12a-12d eine vorgegebene Zeit nicht überschreitet. Wird die Gesamtproduktionszeit dennoch überschritten, wird die zugehörige Kombination aussortiert.

Optimierungskriterien 32 können beispielsweise die Gesamtkosten der jeweiligen Anlagen-Kombination und/oder die Gesamtproduktionszeit sein. Dabei kann eine Rangfolge der Optimierungskriterien 32 definiert werden. Beispielsweise kann primär nach den Gesamtkosten und sekundär nach der Gesamtproduktionszeit gerankt werden.

Das Ranking kann dann als Ausgabe 34 ausgegeben werden. Die Ausgabe 34 kann alternativ oder zusätzlich dazu eine grafische Darstellung der kombinierten Blechbearbeitungs-Anlagen 12-12d umfassen.

Nachfolgend sei ein beispielhafter Auftrag vorgegeben, der die Verarbeitung von 40 kleinformatigen und 60 großformatigen Blechtafeln erfordert. Der Algorithmus 16 wird gefragt, ob es möglich ist, eine Lösung zu generieren, die eine Schneide- und Biegemaschine erfordert, die so konfiguriert ist, dass sie sowohl kleine als auch großformatige Bleche verarbeiten kann. Die Simulation wurde mit den nachfolgend gezeigten Parametern durchgeführt:

|  | Schneid-Geschwindigkeit | | | Biege-Geschwindigkeit | | Entladen | | Blechtafel-Größe | | |
|---|---|---|---|---|---|---|---|---|---|---|
|  | niedrig | mittel | hoch | mittel | hoch | auto | manuell | klein | mittel | groß |
| Zeit | 72 | 60 | 48 | 120 | 96 | 30 | 180 | 0 | 10 | 20 |
| Kos-ten | 5 | 10 | 15 | 10 | 15 | 5 | 1 | 2 | 4 | 6 |

Auf diese Weise dauert die billigste, aber auch die langsamste Konfiguration (Anlagen-Kombination) 647 Minuten und kostet 2120 Einheiten, während die schnellste 317 Minuten dauert und 4020 Einheiten kostet. Durch die Verwendung des CLS Solvers 24 ohne Filterung werden 5184 verschiedene Konfigurationen erhalten. Es wird von einem Zeitlimit von 400 Minuten ausgegangen (spezifische Randbedingung 30). Nach dem Filtern mit SMT-Techniken verbleiben 1332 Lösungen. Die nachfolgende Tabelle zeigt die besten Lösungen in Bezug auf niedrige Kosten und kürzeste Aufenthaltsdauer.

| Position | Kosten | Zeit | 12a | | | 12b | | | 12c | | 12d | |
|---|---|---|---|---|---|---|---|---|---|---|---|---|
|  |  |  | Geschwindigkeit | Blechtafelgröße | Entladen | Geschwindigkeit | Blechtafelgröße | Entladen | Geschwindigkeit | Blechtafelgröße | Geschwindigkeit | Blechtafelgröße |
| 1 | 2240 | 380 | N | K | A | N | M | A | M | K | M | M |
| 2 | 2360 | 380 | N | K | A | N | M | A | M | K | M | G |
| 3 | 2400 | 380 | N | M | A | N | M | A | M | K | M | M |

Unter Vornahme einer Zusammenschau aller Figuren der Zeichnung betrifft die Erfindung zusammenfassend ein Verfahren zur Bestimmung einer optimalen Kombination von Blechbearbeitungs-Anlagen 12a-12d in einer Fertigungsstätte 10. In dem Verfahren werden mehrere, insbesondere eine Vielzahl, vorzugsweise alle, möglichen Anlagen-Kombinationen erstellt und simuliert. Diese Erstellung erfolgt bevorzugt durch ein CLS Modul (CLS Solver) 24. Die erstellten Anlagen-Kombinationen werden dann anhand zumindest eines vordefinierten Optimierungskriteriums 32 gerankt. Das Optimierungskriterium 32 kann in Form der Gesamt-Anlagenkosten und/oder der Gesamt-Produktionszeit der jeweiligen Anlagen-Kombination vorliegen. Das Ranking kann mittels eines SMT Moduls (SMT Frameworks) 28 durchgeführt werden. Das SMT Modul 28 kann weiterhin ein Filtern anhand spezifischer Randbedingungen 30, beispielsweise anhand einer nicht zu überschreitenden Gesamt-Produktionszeit der jeweiligen Anlagen-Kombination vornehmen. Hierdurch können ausgetretene Pfade bei der Planung einer Fertigungsstätte 10 verlassen und unerwartete optimale Anlagen-Kombinationen aufgefunden werden. Die Erfindung betrifft weiterhin ein Computerprogrammprodukt zur Durchführung des Verfahrens.

Bezugszeichenliste

| | |
|---|---|
| 10 | Fertigungsstätte |
| 12a-12d | Blechbearbeitungs-Anlagen |
| 14a-14d | Anlagenparameter |
| 16 | Algorithmus |
| 18 | Anlagen-Bibliothek |
| 20 | Depot |
| 22 | Zieltypfilter |
| 24 | CLS Solver |
| 26 | Baum-Entscheidungspfad |
| 28 | SMT Framework |
| 30 | spezifische Randbedingungen |
| 32 | Optimierungskriterien |
| 34 | Ausgabe |

**Patentansprüche**

1. Verfahren zur Planung einer Fertigungsstätte (10) mit einem Algorithmus (16), wobei der Algorithmus (16) folgende Verfahrensschritte ausführt:

   A) Einlesen der auszuführenden Aufträge; **dadurch gekennzeichnet, dass** der Algorithmus (16) folgende weitere Verfahrensschritte ausführt:
   B) Auswählen mehrerer Blechbearbeitungs-Anlagen (12a-12d) aus einer Anlagen-Bibliothek (18) zur Bearbeitung dieser Aufträge;
   C) Zusammenstellen mehrerer möglicher Anlagen-Kombinationen und Simulieren der Auftragsbearbeitung mit diesen Anlagen-Kombinationen;
   D) Ranking der Anlagen-Kombinationen anhand zumindest eines vordefinierten Optimierungskriteriums (32).

2. Verfahren nach Anspruch 1, bei dem die Erstellung der Anlagen-Kombinationen im Verfahrensschritt C) von einem Combinatory Logic Synthesizer Solver (24) erfolgt.

3. Verfahren nach einem der vorhergehenden Ansprüche, bei dem im Verfahrensschritt D) vor oder nach dem Ranking der Anlagen-Kombinationen ein Ausfiltern der Anlagen-Kombinationen erfolgt, die eine vordefinierte Randbedingung (30) nicht erfüllen.

4. Verfahren nach einem der vorhergehenden Ansprüche, bei dem das Ranking im Verfahrensschritt D) anhand der minimalen Gesamt-Anlagenkosten und/oder der minimalen Gesamt-Produktionszeit der Aufträge erfolgt.

5. Verfahren nach einem der vorhergehenden Ansprüche, bei dem Verfahrensschritt D) von einem Satisfiability Modulo Theory Framework (28) durchgeführt wird.

6. Verfahren nach einem der vorhergehenden Ansprüche, bei dem mehrere Blechbearbeitungs-Anlagen (12a-12d) jeweils mehrere Anlagenparameter (14a-14d) aufweisen.

7. Verfahren nach Anspruch 6, bei dem die Anlagenparameter (14a-14d) die Geschwindigkeit der Blechbearbeitungs-Anlagen (12a-12d), die bearbeitbare Blechtafelgröße und/oder das Vorhandensein einer automatischen Entladevorrichtung umfassen.

8. Verfahren nach Anspruch 6 oder 7, bei dem die Anlagenparameter (14a-14d) jeweils einer diskreten Anzahl von Parameterbereichen zugeordnet sind.

9. Verfahren nach einem der vorhergehenden Ansprüche, bei dem die Anzahl der Blechbearbeitungs-Anlagen (12a-12d) von dem Algorithmus (16) vorgegeben wird.

10. Verfahren nach einem der vorhergehenden Ansprüche mit folgendem Verfahrensschritt:
E) Ausgeben einer grafischen Darstellung der Anlagen-Kombination, die als beste Anlagen-Kombination gerankt wurde und/oder Aufbauen einer Anlagen-Kombination.

11. Verfahren nach Anspruch 10 in Verbindung mit Anspruch 9, bei dem in der grafischen Darstellung die Anzahl der Blechbearbeitungs-Anlagen (12a-12d) angepasst wird.

12. Computerprogrammprodukt, umfassend Befehle, die bei der Ausführung eines Programms durch einen Computer diesen veranlassen, das Verfahren nach einem der vorhergehenden Ansprüche auszuführen.

**Claims**

1. A method for planning a production facility (10) using an algorithm (16), wherein the algorithm (16) executes the following method steps:

    A) reading in the orders to be executed; **characterized in that** the algorithm (16) executes the following further method steps:
    B) selecting a plurality of sheet metal processing systems (12a-12d) from a systems library (18) for processing these orders;
    C) compiling a plurality of possible system combinations, and simulating the order processing using these system combinations;
    D) ranking the system combinations with the aid of at least one pre-defined optimization criterion (32).

2. The method according to claim 1, in which the creation of the system combinations is done by a Combinatory Logic Synthesizer Solver (24) in method step C).

3. The method according to one of the preceding claims, in which a filtering of system combinations that do not meet a pre-defined boundary condition (30) is done in method step D), either before or after the ranking of the system combinations.

4. The method according to one of the preceding claims, in which the ranking in method step D) is done with the aid of the minimum total system costs and/or the minimum total production time of the orders.

5. The method according to one of the preceding claims, in which method step D) is carried out by a Satisfiability Modulo Theory Framework (28).

6. The method according to one of the preceding claims, in which each one of a plurality of sheet metal processing systems (12a-12d) has a plurality of system parameters (14a-14d).

7. The method according to claim 6, in which the system parameters (14a-14d) comprise the speed of the sheet metal processing systems (12a-12d), the size of the sheet metal panel that can be processed, and/or the presence of an automatic unloading device.

8. The method according to claim 6 or 7, wherein each of the system parameters (14a-14d) is assigned to a discrete number of parameter ranges.

9. The method according to one of the preceding claims, in which the number of sheet metal processing systems (12a-12d) is pre-defined by the algorithm (16).

10. The method according to one of the preceding claims, comprising the following method step:
E) outputting a graphical representation of the system combination which had been ranked as the best system combination and/or constructing a system combination.

11. The method according to claim 10 in association with claim 9, in which the number of sheet metal processing systems (12a-12d) is adapted in the graphical representation.

12. A computer program product, comprising commands which, when a computer executes a program, prompt the computer to execute the method according to one of the preceding claims.

**Revendications**

1. Procédé de planification d'un site de production (10) avec un algorithme (16), dans lequel l'algorithme (16) exécute les étapes de procédé suivantes :

   A) lecture des ordres à exécuter ; **caractérisé en ce que** l'algorithme (16) exécute en outre les étapes de procédé suivantes :
   B) sélection de plusieurs équipements de traitement de tôles (12a-12d) à partir d'une bibliothèque d'équipements (18) pour le traitement de ces ordres ;
   C) composition de plusieurs combinaisons d'équipements possibles et simulation du traitement des ordres avec ces combinaisons d'équipements ;
   D) classement des combinaisons d'équipements sur la base au moins d'un critère d'optimisation prédéfini (32).

2. Procédé selon la revendication 1, dans le cadre duquel la constitution des combinaisons d'équipements à l'étape de procédé C) est effectuée par un Solveur de Synthèse par Logique Combinatoire (24).

3. Procédé selon l'une quelconque des revendications précédentes, dans le cadre duquel à l'étape de procédé D), avant ou après le classement des combinaisons d'équipements, un filtrage des combinaisons d'équipements qui ne satisfont pas une condition limite prédéfinie (30) est effectué.

4. Procédé selon l'une quelconque des revendications précédentes, dans le cadre duquel le classement à l'étape de procédé D) est effectué sur la base du coût total minimal des équipements et/ou du temps total minimal de production des ordres.

5. Procédé selon l'une quelconque des revendications précédentes, dans le cadre duquel l'étape de procédé D) est réalisée par un cadre de Satisfiabilité Modulo des Théories (28).

6. Procédé selon l'une quelconque des revendications précédentes, dans le cadre duquel plusieurs équipements de traitement de tôles (12a-12d) comportent chacun plusieurs paramètres d'équipements (14a-14d).

7. Procédé selon la revendication 6, dans le cadre duquel les paramètres d'équipements (14a-14d) comprennent la vitesse des équipements de traitement de tôles (12a-12d), la dimension de la plaque de tôle pouvant être traitée et/ou la présence d'un dispositif de déchargement automatique.

8. Procédé selon la revendication 6 ou 7, dans le cadre duquel les paramètres d'équipements (14a-14d) sont chacun associés à un nombre discret de plages de paramètres.

9. Procédé selon l'une quelconque des revendications précédentes, dans le cadre duquel le nombre d'équipements de traitement de tôles (12a-12d) est défini par l'algorithme (16).

10. Procédé selon l'une quelconque des revendications précédentes, avec les étapes de procédé suivantes :
    E) production d'une représentation graphique de la combinaison d'équipements qui a été classée comme la meilleure combinaison d'équipements et/ou construction d'une combinaison d'équipements.

11. Procédé selon la revendication 10 en liaison avec la revendication 9, dans le cadre duquel le nombre d'équipements de traitement de tôles (12a-12d) est ajusté dans la représentation graphique.

12. Produit de programme informatique, comprenant des instructions qui, lorsqu'un programme est exécuté par un ordinateur, amènent celui-ci à exécuter le procédé selon l'une quelconque des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150032497 A1
- US 20190179290 A1
- EP 3451811 A1

**In der Beschreibung aufgeführte Nicht-Patentliteratur**

- **S. VÖLKER** ; **M. BACHER** ; **P.-M. SCHMIDT** ; **G. GROSS**. Automatische Generierung logistischer Simulationsmodelle auf Basis von Planungswerkzeugen der digitalen Fabrik. *Frontiers in Simulation*, 2005, vol. 15, 518-523
- **J. BESSAI** ; **B. DÜDDER** ; **G. T. HEINEMAN et al.** *CL) S Framework*, 2019
- Combinatory Logic Synthesizer. **J. BESSAI** ; **A. DUDENHEFNER** ; **B. DÜDDER** ; **M. MARTENS** ; **J. REHOF**. Leveraging Applications of Formal Methods, Verification and Validation. Technologies for Mastering Change. Springer, 2014, 26-40
- Z3: An Efficient SMT Solver. **L. DE MOURA** ; **N. BJØRNER**. Tools and Algorithms for the Construction and Analysis of Systems. Springer, 2008, 337-340
- vZ - An Optimizing SMT Solver. **N. BJØRNER** ; **A.-D. PHAN** ; **L. FLECKENSTEIN**. Tools and Algorithms for the Construction and Analysis of Systems. Springer, 2015, vol. 9035, 194-199
- **F. KALLAT** ; **T. SCHÄFER** ; **A. VASILEVA**. CLS-SMT: Bringing Together Combinatory Logic Synthesis and Satisfiability Modulo Theories. *Electronic Proceedings in Theoretical Computer Science*, 2019, vol. 301, 51-65
- Z - An Optimizing SMT Solver. **N. BJØRNER** ; **A.-D. PHAN** ; **L. FLECKENSTEIN**. Tools and Algorithms for the Construction and Analysis of Systems. Springer, 2015, vol. 9035, 194-199